# DEMANDE DE BREVET EUROPEEN

(11) **EP 0 658 402 A1**
(43) Date de publication de la demande: **21.06.1995**
(21) Numéro de dépôt: 94402852.1
(22) Date de dépôt: 12.12.1994
(51) Int. Cl.: B25J 5/00, B62D 57/024

(54) **Dispositif de franchissement d'obstacles pour engin robotisé**

(30) Priorité: 14.12.1993 FR 9314996
(71) Demandeur: COMMISSARIAT A L'ENERGIE ATOMIQUE, F-75015 Paris (FR)
(72) Inventeur: Littmann, François, F-78180 Montigny-le-Bretonneux (FR)
(74) Mandataire: Dubois-Chabert, Guy

(57) **Abrégé**

L'invention concerne un dispositif adaptable sur un engin robotisé pour le franchissement en montée et en descente des obstacles. Ce dispositif comprend au moins une barre d'appui (6) en rotation autour d'un axe (A2) parallèle à l'axe de rotation (A1) de la roue (4), et fixé sur le châssis (2) de l'engin. Des moyens de rotation comportant soit deux actionneurs soit un actionneur associé à un système de roue libre assurent une rotation indépendante de la barre d'appui par rapport à la roue.

Application aux engins robotisés de l'industrie.

## Description

### Domaine technique

La présente invention a pour objet un dispositif de franchissement d'obstacles destiné à des engins robotisés. Elle trouve de nombreuses applications dans les domaines de l'industrie et, en particulier, dans l'industrie nucléaire.

### Etat de la technique

Dans l'industrie, il est de plus en plus fréquent d'utiliser des engins robotisés, plus ou moins sophistiqués, et réalisant différentes fonctions, telles que le nettoyage, l'entretien, les travaux mécaniques, etc.

Ces engins sont généralement aptes à se déplacer sur des surfaces planes, mais surmontent avec difficulté les obstacles, tels que les trottoirs, les marches d'escalier, etc.

Pour éviter les obstacles, certains de ces engins comportent des capteurs (par exemple à ultra-sons) permettant de détecter la présence d'obstacles et donc, de contourner ces obstacles. Or, certains obstacles, tels que les marches d'escalier, peuvent être incontournables.

Aussi, des systèmes mécaniques sont alors employés pour franchir ces obstacles. L'un de ces systèmes consiste en des chenilles placées sous les engins (que l'on appelle aussi, indifféremment, véhicules). Ces chenilles linéarisent les escaliers tels des plans inclinés. Les déplacements sont alors simplifiés puisque le mouvement est rectiligne. Il nécessite cependant un frottement important entre la chenille et l'escalier. En outre, il est possible d'ajouter aux chenilles, des crampons. Cependant, même proéminents, les crampons ne suffisent bien souvent pas à assurer une bonne adhésion des chenilles sur l'escalier car le pas des crampons et le pas des marches d'escalier ne peuvent être adaptés l'un à l'autre dans tous les cas. Ceci engendre des interférences provoquant des pertes d'adhérence et des glissements intempestifs. De plus, la chenille, ayant théoriquement une droite de contact avec le sol, ne tourne que très difficilement.

Un autre système de franchissement des obstacles est un système de roues tripodes. Ce système comporte trois branches formant un angle de 120° les unes avec les autres et équipées chacune d'une roue. Ce dispositif est très répandu pour les chariots tirés, permettant de passer les trottoirs ou les escaliers en étant tirés par une personne.

Des systèmes de roues tripodes motorisés existent et sont le plus souvent basés sur un couplage en effort entre la rotation des tripodes et celle des roues. En effet, le véhicule roule à plat sur deux roues du tripode et lorsqu'il rencontre une élévation de couples sur ces roues, un couple est exercé sur l'axe du tripode pour le faire tourner. Ce système est bien adapté pour la montée d'obstacles et d'escaliers mais pas pour la descente car il n'y a pas d'augmentation de couple lors de la descente et le véhicule glisse.

Pour remédier à ce problème, un procédé propose de motoriser séparément l'axe des roues et celui des tripodes. Un tel procédé, bien que satisfaisant théoriquement, nécessite l'emploi de capteurs pour déterminer quand tourner les tripodes pour monter ou descendre, ce qui rend sa commande complexe. De plus, le volume global du système est important malgré l'emploi de roues de faible diamètre qui entraîne une impossibilité de franchir des petits obstacles.

Un système de franchissement d'obstacles adapté aux fauteuils pour handicapés est décrit dans la demande de brevet DE-A-3 028 351. Ce système consiste en une barre pivotable pouvant être manoeuvrée par l'utilisateur à partir d'un levier ; cette barre pivotable, fixée à l'arrière du fauteuil, sert d'appui lors de montées ou descentes de marches.

Ce système étant manoeuvré entièrement par l'utilisateur, il ne peut être adapté sur un robot.

Il existe encore un autre système de franchissement d'obstacles. Il s'agit d'un système de roues à crampons. Une roue d'un rayon approximativement égal à la hauteur de la marche est équipée de crampons, voire de dents proéminentes. La roue roule sur le sol jusqu'à venir en butée sur la marche, ensuite elle glisse jusqu'à ce qu'un crampon vienne se placer à plat sur une marche.

Il est possible en exerçant un couple suffisant de faire monter la roue même si le coefficient de frottement est faible, l'effort exercé pour vaincre la gravité étant vertical et perpendiculaire à la marche. Selon ce système, les crampons peuvent être escamotables pour rouler sur le sol plat sans vibrations excessives.

Cependant, un tel système de roues à crampons n'assure pas à l'engin une descente sûre et sans encombre des marches. En effet, lors de la descente, il n'y a pas de résistance devant la marche et, en fonction de la position des crampons vis-à-vis du nez de marche, il peut y avoir accrochage ou pas. Si un crampon se pose juste sur le nez de marche, le véhicule avance jusqu'à la perte d'adhérence de la roue et tombe.

Un autre système très connu consiste à utiliser la combinaison de roues (ou de portions de roues) de diamètres différents pour franchir des marches isolées telles que des trottoirs. Un tel système est décrit dans les documents FR-A-2 584 648 et GB-A-2 145 983.

Pour monter ou descendre les marches isolées, le véhicule prend appui sur un secteur angulaire d'une roue de grand diamètre. Cette solution est bien adaptée aux véhicules de nettoyage devant monter des trottoirs par exemple, mais pas à des véhicules devant franchir des volées d'escaliers.

Un autre système encore est celui décrit dans le document US-A-5 228 709 (KAO). Ce système consiste en un fauteuil roulant dont les deux grandes roues sont munies chacune d'un levier à main (ou barre d'appui) permettant au fauteuil de franchir des obstacles. Chacune de ces roues est donc munie d'une barre fixée sur le disque d'entraînement de la roue de telle sorte qu'elle tourne à vide lorsqu'il s'agit d'une rotation dans le sens des aiguilles d'une montre et qu'elle entraîne en rotation le disque d'entraînement lorsqu'il s'agit d'une rotation contraire.

Un tel système présente l'inconvénient d'être difficilement adaptable sur un robot.

### Exposé de l'invention

La présente invention a justement pour but de remédier à ces inconvénients. A cette fin, elle propose un dispositif adaptable sur un engin robotisé pour franchir, en montée ou en descente, des obstacles. Cet engin robotisé comporte des roues montées sur un premier axe de rotation, ainsi qu'un châssis supportant lesdites roues, l'une au moins des roues étant équipée d'une barre d'appui fixée sur le châssis. Il se caractérise par le fait qu'il comporte des moyens de rotation assurant une rotation de cette barre d'appui autour d'un second axe de rotation fixé sur le châssis, ces moyens de rotation comprenant au moins un actionneur apte à découpler la rotation de la barre d'appui par rapport à la rotation des roues.

Selon un mode de réalisation de l'invention, les moyens de rotation comprennent deux actionneurs, l'un des actionneurs commandant la rotation de la roue et l'autre actionneur commandant la rotation de la barre d'appui.

Selon un autre mode de réalisation de l'invention, l'actionneur est relié à la fois à la roue et à la barre d'appui par l'intermédiaire d'un système de roue libre assurant la rotation de la barre d'appui autour du second axe de rotation dans un sens et interdisant ladite opération dans le sens opposé.

Selon l'invention, le second axe de rotation (axe de la barre) peut être confondu avec le premier axe de rotation (axe de la roue).

Selon un mode de réalisation, le dispositif de l'invention comporte un sabot fixé sur une seconde extrémité de la barre d'appui pour assurer une plus grande surface de contact de la barre d'appui sur l'obstacle.

Selon un autre mode de réalisation, le dispositif de l'invention comporte une roue supplémentaire, de diamètre inférieur à la roue de l'engin, fixée sur une seconde extrémité de la barre d'appui pour limiter les frottements entre ladite barre d'appui et l'obstacle.

Selon encore un autre mode de réalisation de l'invention, la barre d'appui comporte un ressort d'extension apte à se détendre en présence d'un obstacle et à se comprimer sur un sol plan, ce qui permet de faire varier la longueur de ladite barre.

### Brève description des dessins

- La figure 1 représente un robot équipé du dispositif de franchissement d'obstacles réalisé selon un mode de réalisation de l'invention ; ce robot est représenté en descente dans un escalier ;
- la figure 2 représente un robot équipé du dispositif de franchissement d'obstacles réalisé selon un autre mode de réalisation de l'invention ; ce robot est également représenté en descente dans un escalier ;
- les figures 3A et 3B représentent, schématiquement, deux modes de réalisation des moyens de rotation du dispositif de l'invention ;
- la figure 4 représente des étapes successives de la montée d'une roue munie d'un dispositif de l'invention ;
- la figure 5 représente des étapes successives de la descente d'une roue munie d'un dispositif de l'invention ; et
- les figures 6 à 12 représentent différents modes de réalisation du dispositif de l'invention.

### Exposé détaillé de modes de réalisation de l'invention

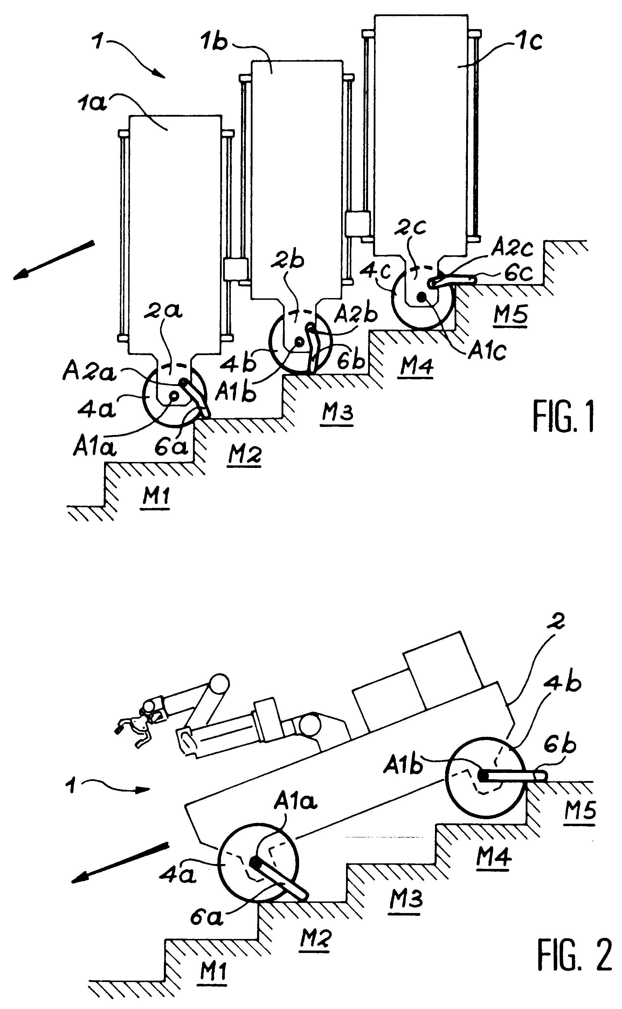

Sur la figure 1, on a représenté un exemple d'engin robotisé apte à se déplacer sur le sol ; l'engin représenté est un robot, référencé 1, apte à être introduit dans un milieu hostile, tel qu'une enceinte de confinement.

Comme représenté sur la figure 1, le robot 1 est constitué de trois wagonnets 1a, 1b, 1c liés ensemble par des glissières et comportant chacun deux roues, respectivement 4a, 4b, 4c. Chaque wagonnet 1a, 1b, 1c comporte en outre un châssis, respectivement 2a, 2b, 2c, supportant les roues 4a, 4b, 4c du wagonnet. Ces roues sont montées chacune autour d'un axe de rotation, respectivement A1a, A1b, A1c.

Le dispositif selon l'invention comporte des barres d'appui, au moins au nombre de deux, montées sur le châssis de l'engin de façon à être rotative autour d'un axe de rotation qui est lui-même fixé sur le châssis.

Selon le mode de réalisation représenté sur la figure 1, chaque barre d'appui, respectivement 6a, 6b, 6c, est montée autour d'un axe de rotation, respectivement A2a, A2b, A2c, fixé sur le châssis respectif 2a, 2b, 2c.

Les axes de rotation A1 des roues sont liés mécaniquement aux axes de rotation A2 des barres par un cliquet ou tout autre système de liaison.

Le dispositif de l'invention comporte en outre des moyens de rotation associés à chacune des barres d'appui. Ces moyens de rotation assurent un découplage de la rotation de la barre d'appui par rapport à la rotation de la roue à laquelle cette barre d'appui est associée. La barre d'appui peut donc effectuer une rotation autour de son axe, indépendante de la rotation subie par la roue. De façon plus précise, ces moyens de rotation permettent l'obtention d'un couplage particulier entre la roue et la barre, tel que la butée sur la marche, l'arrêt de la roue, la rotation de la barre, etc.

Comme décrit plus en détail dans la suite de la description, les moyens de rotation peuvent comporter soit un actionneur associé à un système de roue libre, soit deux actionneurs. De façon plus précise, les barres d'appui 6a, 6b, 6c sont fixées chacune sur un axe de rotation A2a, A2b, A2c parallèle aux axes de rotation A1a, A1b A1c des roues 4a, 4b et 4c.

En se référant à la figure 1, la descente du robot 1 va maintenant être décrite. Sur cette figure 1, la roue 4a a été représentée au moment où elle passe le nez de la marche M2. A cet instant, la barre 6a qui traînait à côté de la roue prend appui sur la marche M2, l'actionneur agissant de façon à ce que la vitesse de rotation de la barre 6a soit au maximum égale à la vitesse de rotation de la roue 4a. Ainsi, la roue 4a tombe de la marche M2 sur la marche M1 à la même vitesse que si elle roulait sur un sol plan.

Sur cette figure 1, on a représenté la roue 4b roulant sur la marche M3. A cet instant, la barre 6b, en rotation libre autour de son axe A2b, "traîne" à côté de la roue 4b.

On a représenté aussi sur cette figure 1, la roue 4c à l'instant où elle vient de tomber de la marche M5 sur la marche M4. La barre 6c est encore en appui sur la marche M5.

Sur cette figure 1, la position des axes A2a, A2b, A2c a été choisie non-confondue avec les axes A1a, A1b, A1c de rotation des roues 4a, 4b, 4c. Cette position des axes A2a, A2b, A2c a été choisie de façon à ce que les barres d'appui 6a, 6b, 6c soient horizontales (pour un meilleur appui sur les marches) lorsque la roue à laquelle chaque barre est associée vient d'atteindre la marche inférieure.

D'une façon générale, la position des axes de rotation des barres est choisie en fonction du rayon des roues de l'engin devant franchir l'obstacle, de la hauteur et de la profondeur des marches à franchir et, plus généralement, de la taille et de la forme de l'obstacle.

Sur la figure 2, on a justement représenté un robot, du type robot télémanipulateur, dont le rayon des roues est sensiblement égal à la hauteur des marches. Dans une telle application, on choisit comme axe de rotation des barres, les axes de rotation des roues.

Le robot 1 représenté sur cette figure 2 comporte deux roues avant 4a et deux roues arrières 4b montées autour des axes respectifs A1a et A1b sur le châssis 2. La roue 4a a été représentée au moment où elle atteint le nez de la marche M2 ; à ce moment, la barre 6a commence à prendre appui sur cette marche M2. La roue 4b a été représentée à l'instant précédent sa prise de contact avec la marche M4 ; la barre 6b est donc en appui sur la marche M5 et effectue une rotation de vitesse au maximum égale à la vitesse de rotation de la roue 4b, ce qui limite la vitesse de descente de la roue 4b.

L'application à la descente d'engins robotisés a été décrite précédemment pour des moyens de rotation réalisés par des actionneurs. Le fonctionnement du dispositif de l'invention est tout à fait identique dans le cas où les moyens de rotation sont réalisés par un actionneur relié à un système de roue libre : le système de roue libre interdisant la rotation libre de la barre dans le sens de rotation des roues, cette barre peut donc avoir une vitesse de rotation, au maximum, égale à la vitesse de rotation de la roue.

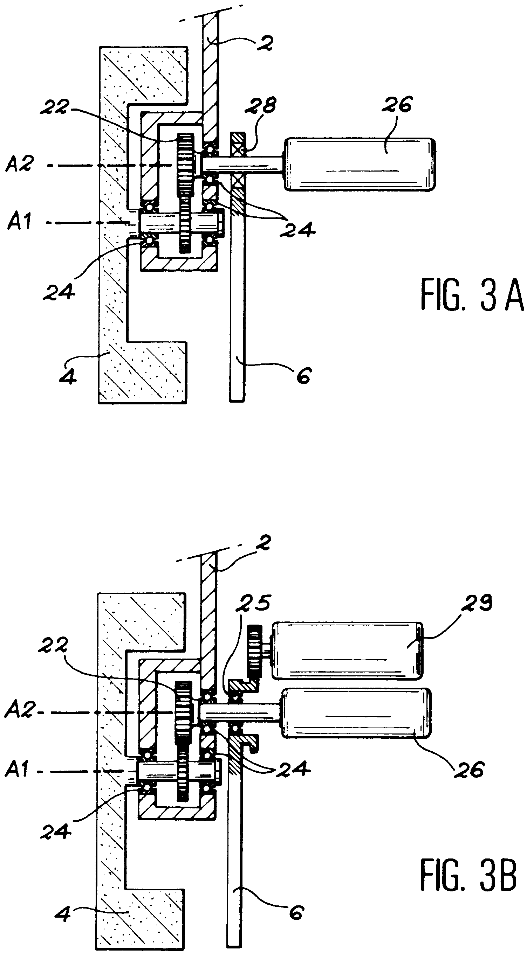

Sur la figure 3A, on a représenté, selon une vue en coupe, une roue sur laquelle sont montés des moyens de rotation conformes à un premier mode de réalisation.

Dans ce mode de réalisation, les moyens de rotation comportent un actionneur 26 fixé sur le châssis 2 de la roue 4 par l'intermédiaire d'un système de roue libre 28. L'actionneur 26 est donc relié au châssis 2 selon l'axe A2 de la barre 6 et assure la rotation de la roue 4 autour de l'axe A1 au moyen d'un engrenage 22 et de roulements à billes 24 (on précise toutefois que l'engrenage 22 pourrait être remplacé par une courroie ou tout autre système d'entraînement).

Cet actionneur est un système actif qui peut être mécanique, hydraulique, pneumatique ou électrique et qui est apte, notamment, à commande le sens de rotation de la roue.

Le système de roue libre 28 permet à la barre 6 de subir les mouvements de rotation induits par l'actionneur 26 dans un sens et d'interdire à cette même barre 6 toute rotation dans le sens opposé. Ce système de roue libre 28 peut être, par exemple, un système du type de ceux généralement employés sur les bicyclettes. Un tel système de roue libre consiste, généralement, en une roue dentée apte à effectuer un mouvement de rotation. Cette rotation, autorisée dans un sens, peut être interdite dans le sens opposé grâce à un clapet de blocage. Ce système, tout à fait connu de l'homme de l'art, n'est donc pas décrit de façon plus précise dans cette demande.

La figure 3B représente, selon une vue en coupe, une roue sur laquelle sont montés des moyens de rotation conformes à un second mode de réalisation.

Dans ce mode de réalisation, les moyens de rotation comportent un actionneur 26 de la roue et un actionneur 29 de la barre. L'actionneur 29 assure la rotation de la barre 6 dans le sens choisi ou son blocage. L'actionneur 26, relié au châssis, est situé sur l'axe A2 et assure la rotation de la roue 4 autour de l'axe A1 au moyen d'un engrenage 22 et de roulements à billes 24.

La barre 6 comporte en outre un système de roulements à billes autour de l'axe A2 permettant, malgré le passage de la motorisation de la roue 4 par cet axe A2, le mouvement de la barre 6 induit par l'actionneur 29.

Dans le cas d'une montée de marches, lorsqu'une roue arrive en butée contre une marche, elle glisse (dans le cas d'un système de roue libre) jusqu'à ce que la barre se bloque sur la marche. La barre peut alors prendre appui sur la marche pour soulever la roue jusqu'à ce que celle-ci atteigne la marche supérieure.

Dans le cas où les moyens de rotation sont un actionneur, lorsque la roue arrive en butée contre une marche, la barre subie une rotation dans le sens de rotation autorisé jusqu'à ce qu'elle soit en contact avec la marche.

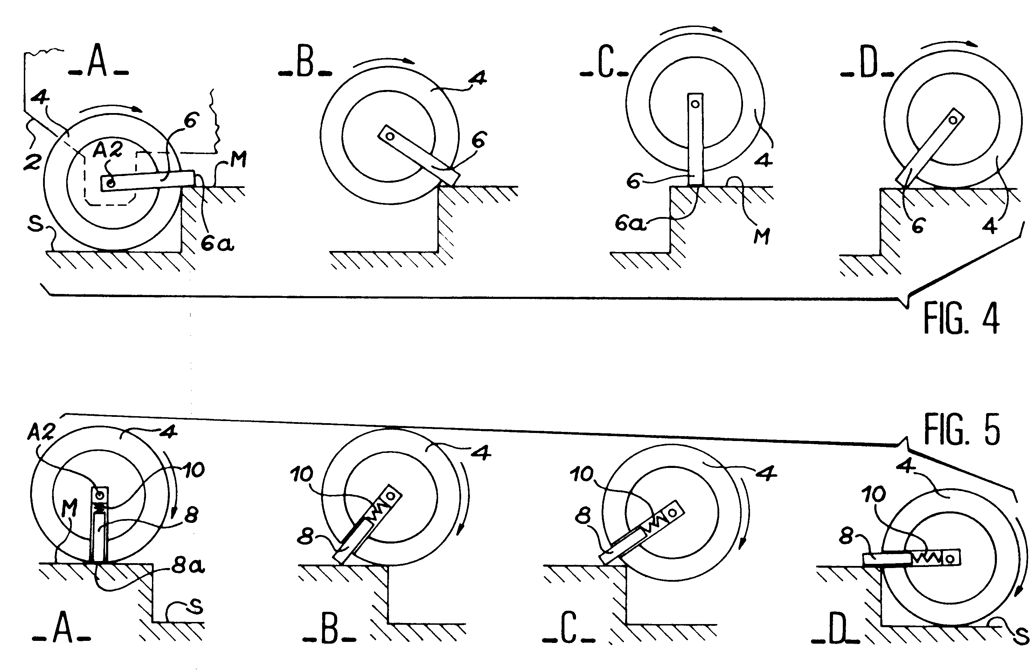

Sur la figure 4, on a représenté les différentes étapes de la montée d'une roue munie du dispositif de l'invention. Le dispositif de l'invention représenté sur cette figure 4 est réalisé selon l'un des modes de réalisation pour lesquels l'axe de rotation A2 de la barre d'appui 6 est confondu avec l'axe de rotation de la roue 4.

Selon l'exemple représenté sur cette figure 4, le sens de rotation de la barre d'appui 6 est le sens des aiguilles d'une montre. Aussi, la rotation dans le sens opposé au sens des aiguilles d'une montre est interdite à ladite barre d'appui 6 du fait du système de roue libre ou de l'actionneur.

Dans la partie A de la figure 4, on voit la roue 4 en butée contre l'obstacle, c'est-à-dire contre la marche M. La barre d'appui 6 autorisée à tourner dans le sens des aiguilles d'une montre, peut donc être mise en contact avec la surface de la marche M.

Etant donné que la rotation dans le sens opposé à celui des aiguilles d'une montre lui est interdite, ladite barre d'appui 6 est fixée par rapport au châssis 2. Une poussée exercée sur la barre d'appui 6 entraîne donc la montée de la roue 4 sur la marche M. Cette étape est représentée en partie B de la figure 4, où on voit la barre d'appui 6 en appui sur la marche M et la roue 4 en train de monter sur la marche M.

Dans la partie C de la figure 4, la roue 4 a monté entièrement la marche et la barre 6 est toujours en appui sur la marche M.

Dans la partie D de la figure 4, la roue 4 qui continue sa rotation retombe sur la marche M. Elle peut alors continuer son chemin.

La barre d'appui 6 liée à la roue 4 et pouvant avoir un mouvement de rotation par rapport au châssis 2, garde en permanence un très léger contact avec le sol ou avec l'obstacle, comme cela est représenté dans la partie D de la figure 4, ce contact permettant une action rapide du dispositif en cas d'obstacle.

Sur la figure 5, on a représenté différentes étapes de la descente de la roue 4 munie d'un dispositif de l'invention. Tout comme sur la figure 4, le sens de rotation de la barre d'appui est le sens des aiguilles d'une montre ; la rotation dans le sens opposé aux aiguilles d'une montre est donc interdite à la barre d'appui. Sur cette figure 5, la barre d'appui est référencée 8. Selon le mode de réalisation représenté sur cette figure 5, la barre d'appui 8 est fixée sur l'axe de rotation A2 par l'intermédiaire d'un ressort 10.

Sur la partie A de cette figure 5, on a représenté la barre d'appui 8 lorsque la roue 4 se déplace sur une surface plane. Le ressort 10 est compressé et la barre d'appui 8 est en contact, par son extrémité 8A avec la surface sur laquelle roule la roue 4, à savoir la marche M.

Sur la partie B de la figure 5, on a représenté la roue 4 lorsque celle-ci arrive près du nez de la marche M. A ce moment, le ressort 10 se détend de sorte que la barre d'appui 8 reste en contact avec la surface de la marche M.

Sur la partie C de la figure 5, on a représenté la roue 4 en descente de la marche M vers le sol S. Le ressort 10 étant détendu, la barre d'appui 8 est toujours en contact avec la marche M. En outre, la rotation de la barre d'appui 8 étant interdite dans le sens inverse à celui des aiguilles d'une montre, un effort est exercé par ladite barre d'appui 8 sur la marche M. La barre d'appui 8 entraîne donc la roue 4 en descente vers le sol S.

Sur la partie D de la figure 5, on a représenté la roue 4 à nouveau en contact avec le sol S : la barre d'appui 8 reste en contact avec la marche M jusqu'à ce que la roue 4 recommence à rouler.

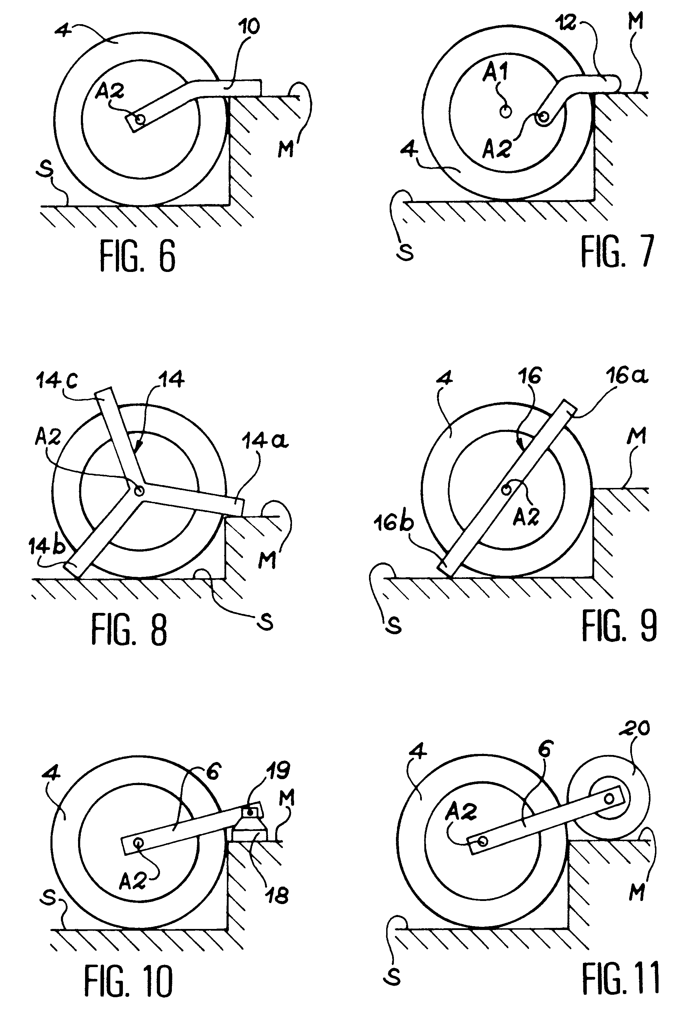

Sur la figure 6, on a représenté un autre mode de réalisation du dispositif de l'invention, où la barre d'appui, référencée 10, a la forme d'un coude permettant un meilleur appui de ladite barre contre la marche M. Selon ce mode de réalisation, l'axe de rotation de la barre d'appui 10 est confondu avec l'axe A2.

Sur la figure 7, on a représenté le dispositif de l'invention dans un mode de réalisation où la barre d'appui 12 est courbe et fixée sur un axe de rotation A2 parallèle à l'axe de rotation A1 de la roue 4.

On comprendra, bien entendu, que de nombreuses formes peuvent être adaptées aux barres d'appui, en fonction de la forme des obstacles à franchir : hauteur des obstacles, fréquence de l'obstacle, etc.

Sur la figure 8, on a représenté encore un autre mode de réalisation du dispositif de l'invention. Selon ce mode de réalisation, la barre d'appui 14 consiste en trois branches 14a, 14b, 14c de même axe de rotation A2.

Sur la figure 9, on a représenté un mode de réalisation où la barre d'appui 16 comporte deux branches 16a et 16b qui ont pour axe de rotation l'axe de rotation A2 de la roue 4.

De tels dispositifs peuvent être utilisés, par exemple, pour franchir des obstacles peu distants les uns des autres. De façon plus particulière, ces dispositifs sont adaptés pour franchir des volées d'escalier.

Sur la figure 10, on a représenté un autre mode de réalisation du dispositif de l'invention. Selon ce mode de réalisation, la barre d'appui 6 (barre d'appui du type de celle représentée en figure 4) comporte, sur sa seconde extrémité (non reliée à l'axe de rotation A2), un sabot permettant d'augmenter la surface de contact entre la barre d'appui 6 et la marche M. Ce sabot, référencé 18, est fixé au moyen d'une articulation 19 sur la barre d'appui 6, de façon à ce que le sabot 18 puisse être posé à plat sur la marche M quel que soit le mouvement de la roue 4 par rapport à la barre d'appui 6.

Sur la figure 11, on a représenté un mode de réalisation du dispositif de l'invention dans lequel une roue de faible diamètre est fixée sur la seconde extrémité de la barre d'appui 6. Cette roue 20, d'un diamètre largement inférieur à celui de la roue 4, est fixée par un moyen de fixation libre sur la barre d'appui 6. Cette roue 20 permet de limiter le frottement entre ladite barre d'appui 6 et la marche M et d'éviter les secousses à l'engin lorsque la roue 4 se pose sur la marche M (respectivement sur le sol S en cas de descente de la marche M).

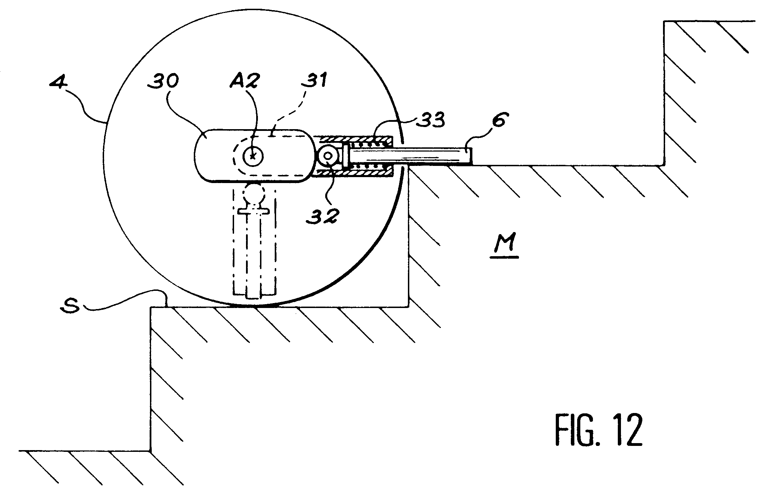

Sur la figure 12, on a représenté encore un autre mode de réalisation du dispositif de l'invention. Selon ce mode de réalisation, une came 30 est fixée sur le châssis de la roue 4 selon l'axe A2 de rotation de la barre et de la roue. La barre 6 est introduite à l'intérieur d'une chape 31 montée sur la came 30. Sur l'extrémité intérieure de la barre 6 (extrémité à l'intérieur de la chape), est fixée une roulette 32 permettant à ladite barre 6 de se déplacer autour de la came 30. Cette came 30 permet donc de faire varier la longueur de la barre 6 en fonction de la direction dans laquelle elle est orientée Un ressort 33 peut en outre être disposé entre la barre 6 et la roulette 32, à l'intérieur de la chape 31. Ce ressort peut se comprimer, lorsque le sol est plan pour permettre à la barre de se rétracter comme cela est montré en traits mixtes sur la figure 12 et, dans le cas contraire, se détendre pour augmenter la surface de contact entre la barre et l'obstacle.

Selon une variante, cette came 30 pourrait comporter une gorge à l'intérieur de laquelle roulerait la roulette 32. Une telle variante ne nécessite pas l'emploi d'un ressort de compression.

On comprendra donc aisément que toutes sortes de barres d'appui peuvent être utilisées en fonction des obstacles à passer et des engins robotisés devant passer ces obstacles. La longueur de ces barres d'appui peut donc varier en fonction par exemple de l'angle de rotation : maximum à l'horizontale pour accrocher la marche et minimum à la verticale pour un gain de place et pour limiter les contacts avec le sol.

Cette variation de taille peut, selon un mode de réalisation, être active, c'est-à-dire choisie suivant l'obstacle à franchir ; dans ce cas, elle peut être activée par une commande du type came ou par une commande électrique.

Selon un mode de réalisation, le sens de rotation qui doit être interdit à la barre d'appui peut être choisi au moyen d'une commande mécanique ou d'une commande électrique.

On comprend, à la lecture de cette description, que le dispositif de l'invention peut être adapté, non seulement sur un engin à roues, mais également sur un engin à chenille puisqu'une chenille comporte des roues reliée entre elles par une série de patins articulés.

## Revendications

1. Dispositif de franchissement d'obstacles adaptable sur un engin robotisé apte à se déplacer sur un sol (S) pouvant comporter des obstacles (M), cet engin robotisé comprenant des roues (4) montées sur un premier axe de rotation (A1) ainsi qu'un châssis (2) supportant lesdites roues, l'une au moins des roues étant équipée d'une barre d'appui (6) fixée sur le châssis, caractérisé en ce qu'il comporte des moyens de rotation (26, 28, 29) assurant une rotation de cette barre d'appui autour d'un second axe de rotation (A2) fixé sur le châssis, ces moyens de rotation comprenant au moins un actionneur (26) apte à découpler la rotation de la barre d'appui par rapport à la rotation des roues.

2. Dispositif selon la revendication 1, caractérisé en ce que les moyens de rotation comprennent deux actionneurs (26, 29), l'un des actionneurs commandant la rotation de la roue et l'autre actionneur commandant la rotation de la barre d'appui.

3. Dispositif selon la revendication 1, caractérisé en ce que l'actionneur est relié à la fois à la roue et à la barre d'appui par l'intermédiaire d'un système de roue libre (28) assurant la rotation de la barre d'appui autour du second axe de rotation dans un sens et interdisant ladite opération dans le sens opposé.

4. Dispositif selon l'une quelconque des revendications 1 à 3, caractérisé en ce que le second axe de rotation est confondu avec le premier axe de rotation.

5. Dispositif selon l'une quelconque des revendications 1 à 4, caractérisé en ce qu'il comporte un sabot (18) fixé sur une seconde extrémité de la barre d'appui (6) pour assurer une plus grande surface de contact de la barre d'appui sur l'obstacle.

6. Dispositif selon l'une quelconque des revendications 1 à 4, caractérisé en ce qu'il comporte une roue supplémentaire (20), de diamètre inférieur à la roue (4) de l'engin, fixée sur une seconde extrémité de la barre d'appui (6) pour limiter les frottements entre ladite barre d'appui et l'obstacle.

7. Dispositif selon l'une quelconque des revendications 1 à 4, caractérisé en ce que la barre d'appui (8) comporte un ressort d'extension (10) apte à se détendre en présence d'un obstacle et à se comprimer sur un sol plan permettant de faire varier la longueur de ladite barre d'appui.

8. Dispositif selon l'une quelconque des revendications 1, 2, 3, 4 et 7, caractérisé en ce qu'il comporte une came (30) fixée sur le châssis et supportant la barre d'appui, cette came assurant un allongement de la barre d'appui en présence d'obstacles et une réduction de ladite barre d'appui en présence de sols plans.
